# EUROPEAN PATENT SPECIFICATION

(11) **EP 3 707 664 B1**
(45) Date of publication and mention of the grant of the patent: **24.12.2025**
(21) Application number: 18877115.8
(22) Date of filing: 26.09.2018
(51) Int. Cl.: G06Q 30/06, G06K 7/10, G06K 19/077, G06K 19/07, G06Q 10/08

(54) **METHOD FOR TRANSFERRING DATA TO AN ELECTRONIC PRICE LABEL, AN ELECTRONIC PRICE LABEL AND AN ELECTRONIC PRICE LABEL SYSTEM**
VERFAHREN ZUM ÜBERTRAGEN VON DATEN AUF EIN ELEKTRONISCHES PREISSCHILD, ELEKTRONISCHES PREISSCHILD UND ELEKTRONISCHES PREISSCHILDSYSTEM
PROCÉDÉ DE TRANSFERT DE DONNÉES VERS UNE ÉTIQUETTE DE PRIX ÉLECTRONIQUE, ÉTIQUETTE DE PRIX ÉLECTRONIQUE ET SYSTÈME D'ÉTIQUETTE DE PRIX ÉLECTRONIQUE

(30) Priority: 10.11.2017 FI 20176008
(43) Date of publication of application: 16.09.2020
(73) Proprietor: MariElla Labels Oy, 01450 Vantaa (FI)
(72) Inventor: KIVINEN, Jarmo, 00560 Helsinki (FI); MÄNNIKKÖ, Tero, 00530 Helsinki (FI); NURMI, Antti, 21500 Piikkiö (FI); SUNDHOLM, Göran, 04310 Tuusula (FI); LINDSTRÖM, Juha, 02600 Espoo (FI)
(74) Representative: Berggren Oy
(86) International application number: PCT/FI2018/050694
(87) International publication number: WO 2019/092306

(56) References cited:
- WO-A1-2013/053999
- WO-A1-2015/144980
- WO-A1-2017/064365
- WO-A1-2017/191358
- CA-A1- 2 175 032
- US-A1- 2003 133 468
- US-A1- 2004 099 735
- US-A1- 2011 057 840
- US-A1- 2012 126 982
- US-A1- 2012 326 849

## Description

### Field of the invention

The invention relates to a method for transferring data to an electronic price label, to an electronic price label and to an electronic price label system.

### Background of the invention

The price information of price labels in retail stores has conventionally been changed manually always when the price of a product changes. New prices are printed onto paper or onto a corresponding material and these labels, with their new price markings, are manually disposed in a location reserved for price labels on the shelves in sales premises. Thus, an employee must first find the correct location of the price label to be updated, after which the previous price label is taken out and discarded and the new price label is placed into its position. A drawback of this solution is *inter alia* that the solution is very laborious and very prone to error. When an error occurs, a situation can arise e.g. in which there is conflicting price information between the price information of the price labels on the shelves and the price information in the checkout system.

To avoid the aforementioned drawbacks, electronic systems have been developed that comprise electronic display units, with electronic displays, on the front edges of shelves or on the products, and the product price information on the displays of these units can be changed centrally from the control center of the system. This makes the updating of price information much easier and much faster. Depending on the system, the information on the displays can be updated by wireline or wirelessly. A problem in wireline systems is that a conductor connection for data transfer, and possibly also for power supply, must be arranged to each display. Since normal stores selling fast-moving consumer goods have a very large number of displays, there must also be a large number of conductors, which causes problems and places limitations on e.g. the placement of price displays.

Complex wirings are not needed in wireless systems, but correspondingly such systems need transmitter-receivers provided with antennas in connection with battery-powered or accumulator-powered price displays, by means of which transmitter-receivers they communicate with the control unit of the system via suitable communications means.

One method in endeavoring to minimize the electricity consumption of the display units, and thus to lengthen the operating time of their batteries/accumulators, is that in the communication between base stations and display units the transmitter-receiver disposed in the display units does not itself implement active radio transmission, whereby the transmission power would be produced on the basis of the display unit's own power source, but instead the display unit only reflects the radio transmission of the base station back at a certain time and in a certain way. A display unit can change the reflectance of its own antenna, in which case the display unit can acknowledge or respond to base station messages with simple response messages.

Modern radio-based wireless electronic price label systems are in power-saving mode for a large part of the time in order to minimize energy consumption. They switch from power-saving mode to listening mode/receiving mode at certain predefined intervals and only then can a message addressed to an electronic label be received by the electronic price label. That being the case, a problem in modern electronic price label systems is that messages and commands that are intended for an electronic price label do not reach the electronic price label immediately but instead at a predetermined time after the electronic price label has awoken from power-saving mode. If a certain base station does not reach a certain electronic price label in its operating range, searching for the label must be continued in the operating ranges of other base stations. The search, described above, for an electronic price label to be performed with a radio-frequency electronic price label system takes time, and transmissions to other price labels cannot necessarily be carried out during the search. This is a problem in particular in the case of electronic price labels to be fastened to products, because their location in the sales premises can often change. US2012326849 is related to an electronic price label system. In the system an access point is arranged to wirelessly transmit product information within a corresponding interrogation zone. The wireless transmission uses an electronic product code ("EPC") transmission protocol. An electronic price label ("EPL") has an antenna, an RFID element and a display. The antenna is arranged to receive the product information from the access point. The RFID element is in communication with the antenna. The RFID element stores the received product information. The display is arranged to display the received product information.

WO2017064365 relates to a method for an electronic price, inventory management and label system which comprises an electronic label system, comprising at least one base station and electronic labels, which are configured to communicate with the base station using two way communication. The system also further comprises means for reading remotely readable tags, such as RFID-tags, wherein remotely readable tags are attached to products and wherein certain electronic label is linked to remotely readable tag(s) of certain product(s). The system is configured to detect the number of certain products in a space by using the means for reading remotely readable tags, and the system is configured to identify the location of these products based on the location of the electronic label linked to the product.

### Brief description of the invention

The purpose of the solution according to the invention is to eliminate the problems of prior art. The method according to the invention is characterized by what is stated in the characterization part of claim 1. The method according to the invention is also characterized by what is stated in claims 2 - 8. The system according to the invention is characterized by what is stated in the characterization part of claim 9 relating to the system. The system according to the invention is also characterized by what is stated in the characterization part of claims 10 -28 relating to the system.

In the solution according to one embodiment of the invention, a query is sent to a certain electronic price label with means for locating the position of electronic price labels and/or of products. After this a response is received from the electronic price label with the means for locating the position of electronic price labels and/or of products, and the location of the electronic price label is determined on the basis of the response. On the basis of the determined location, a request and/or command is sent to the electronic price label with the base station of the electronic price label system operating in the range of the determined location.

The idea of the solution of one embodiment of the invention is to locate the position of an electronic price label e.g. in a situation in which an electronic price label cannot be contacted within the range of its previous base station, or the last location of the electronic price label is not known. Locating a position can be performed by means of a separate system from the electronic price label system, and when the location of the price label in question is clear the system can send information, such as e.g. price information or commands, to the electronic price label with the base station of the electronic price label system, said base station being one operating in range of that location. Locating the position of an electronic price label can be performed by means of an identifier in the electronic price label. The system to be used in locating a position can be based on a different technology than the communication of the electronic price label system between base stations and electronic price labels. In one embodiment of the invention, the identifier to be used in locating the position of an electronic price label is an RFID identifier.

The electronic price label system according to one embodiment of the invention is a bidirectional radio-frequency price label system that comprises base stations that are adapted to communicate with the electronic price labels in such a way that the electronic price labels reflect back a transmission they receive from a base station.

The system can also comprise means for locating the position of the identifiers to be used in locating position, said identifiers being in the electronic price labels, e.g. means for reading RFID tags. The means in question can be arranged in connection with the base stations. The means in question can also be arranged apart from the base stations of the electronic price label system.

The means for locating the position of electronic price labels, such as an RFID reader, can use the antennas of a radio-frequency electronic price label system, or their own antenna or plurality of antennas can be arranged for them.

In one embodiment of the invention, the electronic price label system is adapted to record in the system information about the previous location of electronic price labels.

An electronic price label to be used in the system according to the invention comprises communication means, by the aid of which the electronic price label can communicate with a radio-frequency electronic price label system, e.g. in such a way that it reflects back a transmission it receives. The electronic price label also comprises an identifier, such as an RFID identifier, or some other identifier to be used for locating a position, which identifier can be used for locating the position of the electronic price label.

An advantage of the arrangement described above is that, by means of a system to be used as an aid for RFID or other position localization, the position of an electronic price label can be located more rapidly than in the case of a radio-frequency electronic price label system in which an electronic price label responds to a base station by reflecting back a message it receives. When it is known in which operating range of which base station of the electronic price label system an electronic price label is located, it is more advantageous to communicate via a radio-frequency electronic price label system than e.g. via an RFID system, because this uses less energy in the electronic price label. By means of the solution according to the invention, the efficiency of communication of an electronic price label system improves because a time-consuming search function does need to be performed with the electronic price label system. If locating the position of an electronic price label were to be performed via a radio-frequency bidirectional price label system, the position localization of a certain electronic price label can interrupt all the other transmissions of the electronic price label system for the duration of the search for the particular label.

The purpose of one embodiment of the invention is also to enable an inexpensive and reliable electronic price label that is compact in size, and that can communicate reliably with an RFID system.

In the solution according to one embodiment of the invention, an electronic price label comprises a display for displaying information relating to a product, at least one communication module and an RFID antenna connected to the communication module, which RFID antenna comprises two parts, of which the first antenna part is arranged on the circuit board of the electronic price label, and the second antenna part, which is connected to the first antenna part, is arranged in connection with the envelope part of the electronic price label, separate from the circuit board.

In one embodiment of the invention, the second antenna part is fitted inside the envelope part of an electronic price label and/or on an inside surface of an electronic price label and/or at least partly inside the structure of the envelope part. The second antenna part can e.g. be integrated directly into the injection molding, painted on the inside surface of the envelope and/or connected mechanically to the envelope.

In one embodiment of the invention, the second antenna part comprises two dipole branches.

In one embodiment of the invention, the first antenna part is arranged on a flexible or hard circuit board. The first antenna part can be arranged on one side of the circuit board or on both sides of the circuit board. The first antenna part can function as a fitting part and/or as a radiator part of the antenna.

In one embodiment of the invention, the electronic price label further comprises second communication means. The second communication means can be communication means that are adapted to communicate by means of a near field, e.g. by means of NFC. The second communication means can be communication means that are adapted to communicate by means of a far field, e.g. by means of a radio-frequency electronic price label system.

In an embodiment in which an electronic price label also comprises communication means, by the aid of which the electronic price label can communicate with a radio-frequency electronic price label system, the electronic price label system can make good use of both RFID and radio-frequency communication, in which an electronic price label reflects back a transmission it receives, in the communication to be used with labels. In this case, the electronic price label system can e.g. locate the position of a certain electronic price label by means of RFID, and when the location of the price label in question is clear the system can send information to the electronic price label with the base station operating in the area in question, such information being e.g. price information or commands.

The structure of an electronic price label described above achieves a number of important advantages when it is compared to solutions known in the art. By means of the structure described, an RFID antenna can be arranged as far away as possible from components that interfere with it, such as a display and battery, and that form a ground plane. Since it is desirable to keep the size of an electronic price label small, the circuit board of the electronic price label must also be small. In this case the performance of the RFID antenna would be poor if it were disposed on the circuit board because it would be in the immediate proximity of components causing interference. Via the solution described, the performance of the antenna can be kept good and simultaneously a compact structure for the electronic price label can be achieved. By means of an RFID antenna, an electronic price label and the product associated with it can be tracked e.g. in a supply chain and in sales premises as well as e.g. in changing booths.

### Brief description of the figures

In the following, the invention will be described in more detail by the aid some embodiments with reference to the drawings 1 - 5, wherein
- Fig. 1: presents a diagrammatic and simplified electronic price label system according to one embodiment of the invention,
- Fig. 2: presents in a simplified manner a base station of an electronic price label system according to one embodiment of the invention, and
- Fig. 3: presents in a simplified manner the base station of an electronic price label system according to another embodiment of the invention,
- Fig. 4: presents in a simplified manner the structure of an electronic price label according to one embodiment of the invention,
- Fig. 5A: presents an oblique view of the structure of an electronic price label according to another embodiment of the invention, and
- Fig. 5B: presents a side view of the structure of the electronic price label according to the embodiment presented in Fig. 5A.

### Detailed description of the invention

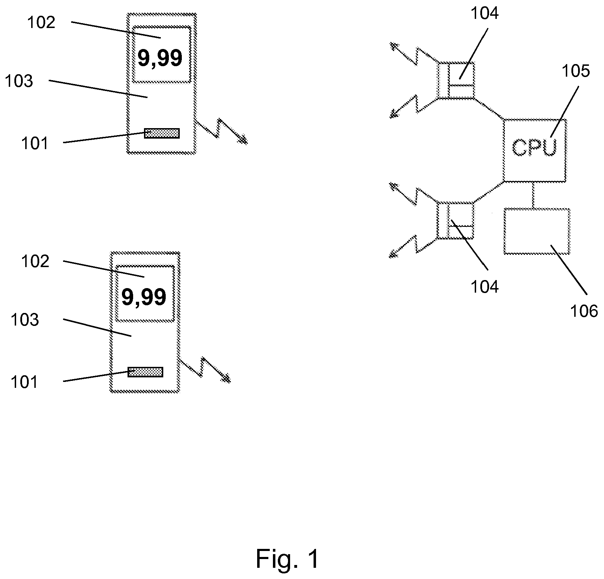

Fig. 1 presents in a diagrammatic and simplified manner the arrangement according to the invention, which arrangement can be used e.g. in a retail store or in corresponding sales premises. Electronic price labels 103 can be affixed to products and/or to shelves. The display 102 of the electronic price labels is arranged to show information relating to a product, such as e.g. price, product name and possibly some other information relating to the product. Electronic price labels can communicate with the rest of the system via base stations 104.

According to one embodiment of the invention, the electronic price label system can comprise, in addition to electronic price labels, at least communication means 106, such as a central unit 105 provided with a radio transmitter, via which e.g. updated price information and other control data can be sent via the base stations 104 of the system to the electronic price labels 103. In addition, it has been possible to connect to the system scanners that are at the checkout registers, said scanners scanning the price of a product and being connected to the checkout system, in which case the checkout system and the electronic price labels always have the same up-to-date information about the prices of products. The central unit 105 can be further connected to other controlling systems or supporting systems. The wireless connection between the base stations 104 and the electronic price labels 103 is described with arrows.

The electronic price label to be used in the system according to one embodiment of the invention comprises communication means, by the aid of which the electronic price label can communicate with a radio-frequency electronic price label system. In the embodiment in question, the electronic price label also comprises an identifier, e.g. an RFID identifier, to be used in locating the position of a label. In the communication to be used with labels, the electronic price label system makes good use of both an identifier to be used in locating a position, such as RFID, and radio-frequency communication, in which an electronic price label reflects back a transmission it receives. The electronic price label system can thereby e.g. locate the position of the identifier of a certain electronic price label, e.g. by means of RFID, and when the location of the price label in question is clear, the system can send information to the electronic price label with the base station operating in the area in question via bidirectional radio-frequency communication, said information being e.g. price information or commands. The position localization can be performed e.g. in such a way that first a query is sent with the means for locating the position of a price label, e.g. via RFID, to an electronic price label. When the electronic price label responds to the query, the system quickly ascertains in which operating range of which base station of the electronic price label system the electronic price label is located. After this the electronic price label system can send with the base station in question new price information and/or a command to the electronic price label using a radio-frequency communication method, in which the electronic price label can respond to the message by reflecting back the message it receives.

An advantage of the arrangement described above is that, by means of the identifier of an electronic price label, the electronic price label can be positioned more rapidly than in the case of a radio-frequency electronic price label system in which an electronic price label responds to a base station by reflecting back a message it receives. When it is known in which operating range of which base station of the electronic price label system an electronic price label is located, it is more advantageous to communicate via a radio-frequency electronic price label system than e.g. via an RFID system, because this uses less energy in the electronic price label.

In one embodiment of the invention, position localization is performed only when an electronic price label does not respond from its previous location or the previous location is not known to the system, such as can be the situation e.g. in the case of bringing new products and the price labels attached to them into the sales premises.

In one embodiment of the invention, the electronic price label system can also form a list of possible base stations specific to a price label, within the operating range of which base station the price label can be found. The different base stations in the list can be arranged in sequence, e.g. on the basis of the probability of a certain electronic price label being found within the operating range of each base station. If a label is contacted within the range of a certain base station, the priority of the base station in question can be raised in the sequential list of base stations of a certain price label. If a label cannot be contacted within the range of a certain base station, the priority of the base station in question can be lowered in the sequential list of base stations of the particular price label. Also the result of position localization performed with RFID or with other means can be used in arranging the sequence of the base station list of a certain price label according to which base station range the electronic price label will probably be found in. In such a case, the priority of the base station of the electronic price label system, within the range of which base station the electronic price label is found by the aid of the means for locating the position of price labels, can be raised in the base station list. By means of this type of arrangement, an electronic price label system is able to adapt to a changing environment and to keep transmissions made in the ranges of the incorrect (from the viewpoint of a certain price label) base stations to as few as possible. The product group of a product associated with a certain price label can also be used as a sequencing criterion in the list of base stations, the occurrence of which product group in the range of a particular base station can be more probable than in the range of another base station. The lifecycle phase of the product or price label associated with the price label in question can also be used as a sequencing criterion. In one embodiment of the invention, a base station having an operating range within which the electronic price label is most probably located is used in the transmission, i.e. a base station that is first on the base station list of a certain price label.

In the following one example of what e.g. an electronic price label affixable to a product can be like is presented in more detail. A receiver provided with a display controller connected to a display and with an antenna is affixed to an electronic price label, and so also is a power source that is e.g. an ordinary battery. The power source is arranged to provide electrical energy to the electronic price label and to its display controller. The price information or other information visible on the display can be updated wirelessly from the central unit via the receiver and display controller. In this embodiment, the update information and control information are transferred by means of radio waves, but other data transfer modes are possible. Each electronic price label forms a thin price label, provided with a display, similar in appearance to a paper price label, on which the necessary prices of products, together with other needed markings, are formed by changing the color of the display segments. The color of the display segments and also of the background is changed by means of an electrical field formed by an electric current, as is described above.

The display of an electronic price label to be used in the system according to the invention can be implemented e.g. as an electronic laminated display, which forms a thin price label provided with display segments and similar in appearance to a paper price label, on which the information relating to a product, e.g. the prices of products together with other needed markings, are presented by changing the color of the display segments. One layer of the display is e.g. an active ink layer. In the ink layer are numerous microcapsules filled with liquid, which microcapsules contain e.g. essentially black particles that are positively surface-charged and essentially white particles that are negatively surface-charged, the placement of which particles in the microcapsules is controlled with an electrical field such that for the desired display segments the black particles are at the top, in which case those display segments appear to be black when viewed from above, and for the other display segments the white particles are at the top, in which case these display segments appear to be pale when viewed from above. The background of the display consists of the same microcapsules, so that e.g. price information can be presented as dark numbers against a light background or, if desired, *vice versa.* For example, the electrophoretic microcapsule laminated display presented in Finnish patent application no. FI 20050192 can be used as this type of display.

In the following, the communication of an electronic price label with a base station by means of a reflection between the unit in question and the system wirelessly controlling it will be described in slightly more detail and in an exemplary manner in the case of one embodiment of the invention.

The base stations can communicate with the display units by sending signals that all the display units listen to and from which signals an individual display unit identifies a command addressed specifically to it on the basis of the identifier specific to that display unit. After receiving a command addressed to itself, an individual display unit can respond to the base station by reflecting the base station's own transmission back to the base station modified by the amount of the phase shift caused by a certain time delay and at a certain moment in time. Typically, after sending a command intended for a certain price display, a base station starts to send for a certain time e.g. a certain type of carrier wave, which the price display that identified the command reflects back with a certain phase shift. A base station is thus able to identify a reflection response as belonging to a certain price display because it is able to wait for a certain period of time after the individualized command it sends to the display in question. The base station can distinguish from its own transmission the reflection response of considerably weaker power than the transmission, based on the phase shift produced in it by the display device.

In the example arrangement, the electronic price label has state-changing means for changing the state of the antenna of the receiver between at least two states, in which e.g. in the first state the reflectivity of the antenna is good and in the second state the reflectivity is poor. Correspondingly, the antenna states can be adapted with the state-changing means in such a way that in different states the antenna reflects radio waves in different phases. In this case, therefore, the electronic price label is adapted to change the state of the antenna of its receiver in order to produce a coded reflection in a certain manner with a different time delay according to the state of the antenna. The communication means connected to a base station interpret different time delays as coded data signals sent by an electronic price label, and e.g. the communication means identify each electronic price label based on these data signals.

The aforementioned coding at its simplest is that an electronic price label reflects back the carrier wave transmitted by the communication means, which carrier wave can have a frequency of e.g. 685 MHz, in such a way that the electronic price label earths the receiver antenna by means of the state-changing means e.g. at a frequency of 150 kHz, thus forming a certain type of square wave from the reflected signal. The electronic price label thus affects the reflected signal by changing the state of the antenna. In this reflection, the phase shift undergone by the signal would most suitably be 180 degrees, at which detection of a low-power reflection with the communication means is at its best. Electronic price labels are in power-saving mode for much of the time and at times change their state to receiving mode. In receiving mode, they can detect message, e.g. new price information, sent to them and execute commands given to them.

After sending a command, the central unit of the apparatus can send information about the changes in the state of the electronic price label that occurred and/or were executed onwards via the network, e.g. to a POS system. The apparatus can also receive information intended to be sent to a certain electronic price label via a network, e.g. from a POS system. This type of information can be e.g. price information to be shown on the display of the electronic price label or extinguishing information.

Use of the invention is not limited to price displays using the type of display technology of the type described above, but instead it is obvious that the price displays can be implemented using any technology whatsoever that is *per se* known in the art. The solution described above relates specifically to how the communication of the electronic price labels and the electronic price label system can be efficiently arranged.

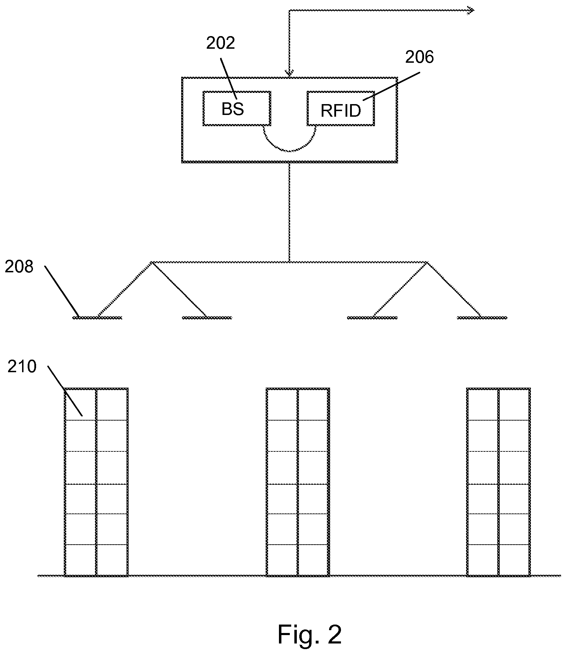

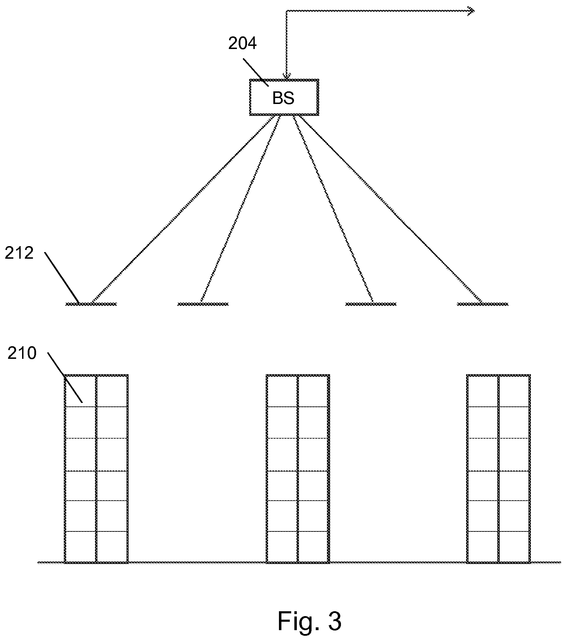

Figs. 2 and 3 present in a simplified manner the base stations, according to some embodiments of the invention, of an electronic price label system. According to these embodiments, a base station comprises communication means for bidirectional radio-frequency communication with the electronic price labels that are e.g. fastened to products on the shelves 210. A base stations is adapted to communicate with the electronic price labels in such a way that the electronic price labels reflect back a transmission they receive from a base station. The system also comprises means for locating the position of the identifiers to be used in locating position, said identifiers being in the electronic price labels, e.g. means for reading RFID tags. In the embodiments of Figs. 2 and 3 the base station of the electronic price label system and the means for locating the position of price labels use the same antennas. In this way it can also be reliably deduced by means of position localization in which operating area of which base station the located electronic price label is situated. The system can e.g. alternate traffic of the means for locating the position of electronic price labels and of the base stations of the electronic price labels and/or distribute operating time to different units according to need.

In one embodiment of the invention, the RFID system and the radio-frequency electronic price label system can operate in essentially the same frequency range, in which case the same antenna of the base station of the electronic price label system can be used in both communication occurring via RFID and in communication occurring with the radio-frequency electronic price label system. In such a case, a base station of the electronic price label system can comprise a switch that is adapted to connect one and the same antenna to the RFID communication means and to the communication means of the radio-frequency electronic price label system alternately and/or according to need.

In the embodiment of Fig. 2 the means for locating the position of a price label are arranged in connection with the base stations. In the case of the embodiment in question, the means for locating the position of price labels is an RFID reader 206 that is connected to a base station 202 of the electronic price label system via wired or wireless means, such as e.g. via a USB interface. The RFID reader 206 and base station 202 can be situated in a common unit although functionally they separate units. In the embodiment of Fig. 2 the RFID reader 206 and the base station 202 use the same antennas 208.

The embodiment of Fig. 3 otherwise corresponds to the embodiment of Fig. 2, but in it the means for locating the position of electronic price labels are integrated into a base station 204 of the electronic price label system. In the embodiment of Fig. 3 the means for locating the position of electronic price labels and the base station use the same antennas 212. The means for locating the position of electronic price labels can be an RFID reader.

The means for locating the position of price labels can thus be arranged apart from the base stations of the electronic price label system and/or they can use their own and separate antennas.

In one embodiment of the invention, the electronic price label system can further comprise security gates, and an alarm signal can be based on a response of the security gates when an electronic price label is taken though a security gate.

In one embodiment of the invention, the electronic price label system can further comprise RFID readers that can be arranged e.g. in connection with exits, e.g. above them. In this embodiment, an alarm signal can be based on a response of an RFID reader when an electronic price label comprising an RFID identifier is taken into the reading range of the RFID reader.

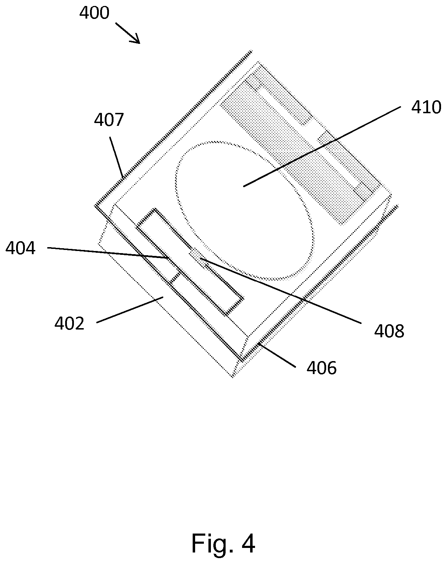

Fig. 4 presents a diagrammatic and simplified view of one electronic price label 400 according to the invention. The electronic price label 400 comprises a display (not presented in the figures), such as e.g. a laminate display, which is arranged to display the price information and/or product information of a product. Also other information relating to a product, such as e.g. the name of the product, can be presented on the front surface of an electronic price label. The frame part of an electronic price label can, in terms of its material and structure, be hard or elastic and flexible. The electronics of an electronic price label can be disposed inside the frame part or in connection with it. The display of an electronic price label is provided with display segments or pixels. The electronic price label 400 resembles a price label of paper, on which price label the required prices of products and other necessary symbols are formed by changing the colors of the segments or pixels of the display. The display can be dichromatic or polychromatic. The electronic price label can have an aperture other fastening means for fastening the electronic price label to a product.

In one embodiment of the invention,, one layer of the display is e.g. an active ink layer. The ink layer contains a number of microcapsules, which are filled with a liquid and which contain e.g. essentially black particles, which have a positive surface charge and the location of which is controlled with an electrical field in such a way that in the desired display segments the black particles are on, wherein the aforementioned display segment appears black when it is viewed from above, and in the other display segments the white particles are on, wherein these display segments appear white when viewed from above. The background of the display is formed from the same microcapsules, in which e.g. price information can be displayed as dark numbers against a light background or, if so desired, *vice versa.* This type of display, which is used, can be an electrophoretic microcapsule display laminate as described e.g. in Finnish patent application FI 20050192. In one embodiment of the invention, the surface of the electronic price label is essentially flat. The electronic price label can also comprise a battery 410.

The electronic price label according to one embodiment of the invention comprises communication means, with which it can communicate with an RFID system or with an RFID reader. In the solution according to one embodiment of the invention, the RFID antenna of an electronic price label comprises two parts, of which the first part is arranged on the circuit board of an electronic price label and the second part in connection with the envelope part of the electronic price label or integrated into the body of the electronic price label. In the case of the embodiment presented in Fig. 4, the first antenna part 404 is formed into essentially the shape of a loop, which is arranged on the circuit board 402. The second antenna part is formed from two branches 407, 408 of a dipole connected to the first antenna part, which are arranged in connection with the envelope part and separately from the circuit board. The first antenna part 404 can function as a fitting part (as inductance) of the antenna and/or as a radiator part of the antenna.

In one embodiment of the invention, the first antenna part 404, e.g. a loop, is fastened to the circuit board via only one pad 408, in which case a smaller size can be achieved than in the situation in which a number of pads were used for connecting the antenna part to the circuit board.

In one embodiment of the invention, an electronic price label comprises second communication means in addition to the RFID communication means. The second communication means can be e.g. communication means with which an electronic price label can communicate with a radio-frequency electronic price label system and with the base stations of it. In this embodiment, with the aid of these communication means, the electronic price labels can listen for a transmission sent by the electronic price label system and identify a command intended for itself on the basis of an identifier specific to a certain price label. After receiving a command addressed to itself, an individual electronic price label can respond to the base station by reflecting the base station's own transmission back to the base station, modified by the amount of the phase shift caused by a certain time delay, and at a certain moment in time. Typically, after sending a command intended for a certain price label, a base station of the electronic price label system starts to send for a certain time e.g. a certain type of carrier wave, which the price label that identified the command reflects back with a certain phase shift. A base station of the electronic price label system is thus able in this embodiment to identify a reflection response as belonging to a certain price label because it is able to wait for a certain period of time after the individualized command it sends to the price label in question. The base station can distinguish from its own transmission the reflection response of considerably weaker power than the transmission, based on the phase shift produced in it by the display device.

In the aforementioned embodiment, the electronic price label can have communication means, in which are state-changing means for changing the state of the antenna of the receiver between at least two states, in which e.g. in the first state the reflectivity of the antenna is good and in the second state the reflectivity is poor. Correspondingly, the antenna states can be adapted with the state-changing means in such a way that in different states the antenna reflects radio waves in different phases. In this case, therefore, the electronic price label can be adapted to change the state of the antenna of its receiver in order to produce a coded reflection in a certain manner, the coded reflection having a different time delay according to the state of the antenna. The base stations of the electronic price label system can interpret different time delays sent by electronic price labels as coded data signals, based on which e.g. the base stations can identify each display unit. The aforementioned coding can, at its simplest, be such that an electronic price label can reflect back a carrier wave transmitted by a base station, which wave can be of a frequency of e.g. 685 MHz, in such a way that the electronic price label earths, by means of the state-changing means, the antenna of the receiver e.g. at a frequency of 150 kHz, thus forming a certain kind of square wave from the reflected signal. The electronic price label can thus affect the reflected signal by changing the state of the antenna. In this reflection the phase shift undergone by the signal can be e.g. 180 degrees. The communication method described in the preceding is presented as only an example and the communication between an electronic price label according to the invention and a base station of the electronic price label system can be arranged in another manner known in the art.

In an embodiment in which an electronic price label also comprises communication means, by the aid of which the electronic price label can communicate with a radio-frequency electronic price label system, the electronic price label system can make good use of both RFID and radio-frequency communication, in which an electronic price label reflects back a transmission it receives, in the communication to be used with labels. In this case, the electronic price label system can e.g. locate the position of a certain electronic price label by means of RFID and, when the location of the price label in question is known, the system can send information, such as e.g. price information or commands, to the electronic price label with the base station operating in the area in question. The position localization can be performed e.g. in such a way that first a query is sent via RFID to an electronic price label. When the electronic price label responds to the query, the system quickly ascertains in which operating range of which base station of the electronic price label system the electronic price label is located. After this, the electronic price label system can send with the base station in question new price information and/or a command to the electronic price label using a radio-frequency communication method, in which the electronic price label can respond to the message by reflecting back the message it receives.

An advantage of the arrangement described above is that, by means of RFID, the position of an electronic price label can be located more rapidly than in the case of a radio-frequency electronic price label system in which an electronic price label responds to a base station by reflecting back a message it receives. When it is known in which operating range of which base station of the electronic price label system an electronic price label is located, it is more advantageous to communicate via a radio-frequency electronic price label system than via an RFID system because this uses less energy in the electronic price label. Also, the communication efficiency of an electronic price label system improves because a time-consuming search function does need to be performed with the electronic price label system. If locating the position of an electronic price label were to be performed via the price label system, the position localization of a certain electronic price label can interrupt all the other transmissions of the electronic price label system during the search for the particular label.

In one embodiment of the invention, the RFID system and the radio-frequency electronic price label system can operate in essentially the same frequency range, in which case the same antenna of the electronic price label can be used in both communication occurring via RFID and in communication occurring with the radio-frequency electronic price label system. In this case, the electronic price label can comprise a switch that is adapted to connect one and the same antenna to the RFID communication means and to the communication means of the radio-frequency electronic price label system alternately and/or according to need.

The second communication means can, in one embodiment of the invention, be communication means that are adapted to communicate by means of NFC.

In one embodiment of the invention, it is possible to communicate with the electronic price labels via only the RFID system. In such a case e.g. new price information and/or commands can be sent via RFID.

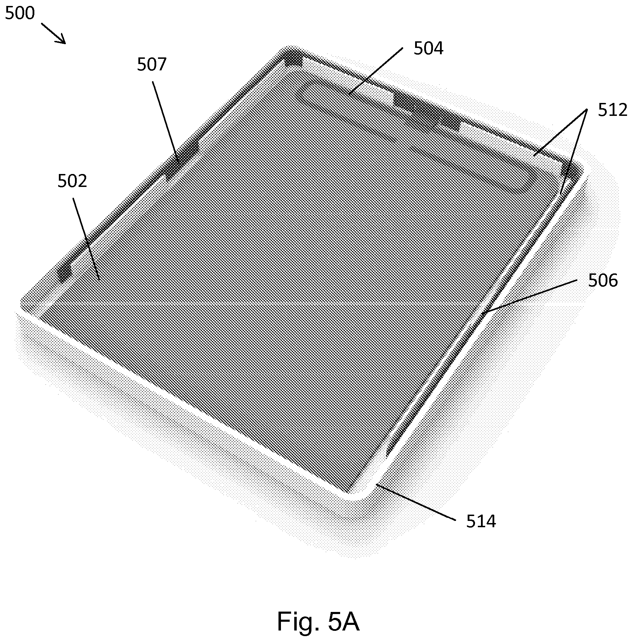

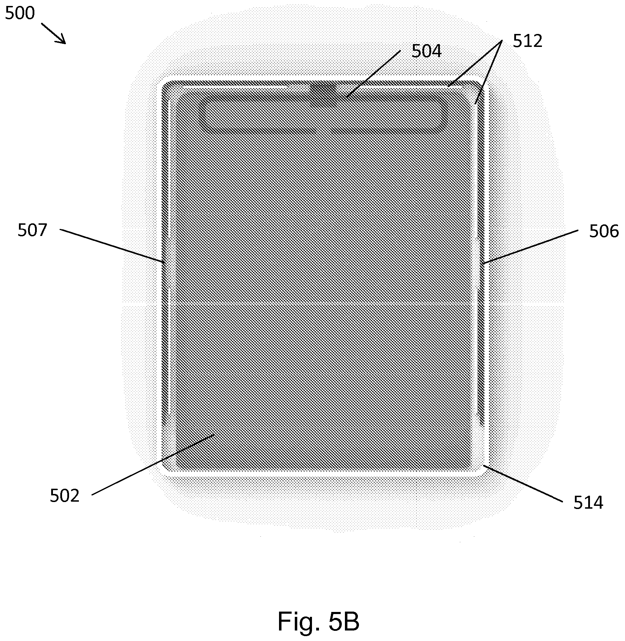

Figs. 5A - 5B present an embodiment which is arranged to function according to the same principle as the embodiment presented in Fig. 4. In the embodiment presented in Figs. 5A and 5B, the first antenna part 504 of the electronic price label 500 is arranged on the circuit board 502 and the second antenna part and its dipole branches 506, 507 are arranged to run in connection with the inside surface of a side wall of the envelope part 514. A guide structure 512 is arranged in the envelope part 514 in this embodiment, which guide structure is formed from walls, which walls are arranged in the proximity of the side walls of the envelope part 514 in such a way that a space remains between the guide walls and the side walls of the envelope part for the branches 506, 507 of the dipole of the antenna part.

As is the case for the embodiments presented above, the price label presented by the figures otherwise corresponds to the embodiments presented in the earlier figures, and comprises e.g. a display for presenting information relating to a product.

In one embodiment of the invention, an electronic price label further comprises a second antenna, separate from the RFID antenna, said second antenna being arranged inside or outside the electronic price label, and which can function as e.g. an antenna of the electronic price label system or as an NFC antenna.

The invention also relates to an electronic price label system, which comprises a plurality of electronic price labels and at least one base station that is adapted to send and receive information to/from any electronic price label whatsoever.

In one embodiment of the invention, the electronic price label comprises antitheft properties.

In one embodiment of the invention, the frame part, front surface and/or rear surface of the electronic price label and/or the fastening means are essentially flexible. In one embodiment of the invention, the envelope part, frame part, front surface and/or rear surface of the price label and/or the protective element are essentially hard and inflexible.

The invention also relates to electronic price label 400, 500 that comprises a display for displaying information relating to a product. The electronic price label further comprises at least one communication module and an RFID antenna connected to the communication module, which antenna comprises two parts, of which the first antenna part 404, 504 is arranged on the circuit board 402, 502 of an electronic price label, and the second antenna part 406, 407, 506, 507, which is connected to the first antenna part, is arranged in connection with the envelope part 514 of an electronic price label, separate from the circuit board 402, 502.

In one embodiment of the invention, the second antenna part 406, 407, 406, 407 of an electronic price label is fitted inside the envelope part 514 of an electronic price label and/or on an inside surface of an electronic price label and/or at least partly inside the structure of the envelope part 514.

In one embodiment of the invention, the second antenna part of an electronic price label is integrated directly into the injection molding of the envelope part 514, painted onto the inner surface of the envelope part 514 and/or is connected mechanically to the envelope part 514.

In one embodiment of the invention, the second antenna part of an electronic price label comprises two dipole branches 406, 407, 506, 507.

In one embodiment of the invention, the first antenna part 404, 504 of an electronic price label is arranged on a flexible or hard circuit board 402, 502.

In one embodiment of the invention, the first antenna part 404, 504 of an electronic price label is arranged on both sides of the circuit board 402, 502.

In one embodiment of the invention, first antenna part 404, 504 of an electronic price label the first antenna part 404, 504 of an electronic price label is arranged to function as a fitting part and/or a radiator part of the RFID antenna.

In one embodiment of the invention, an electronic price label 400, 500 further comprises second communication means.

In one embodiment of the invention, the second communication means of an electronic price label are communication means that are adapted to communicate by means of a near field, e.g. by means of NFC.

In one embodiment of the invention, the second communication means of an electronic price label are communication means that are adapted to communicate by means of a far field, e.g. by means of a radio-frequency electronic price label system.

In one embodiment of the invention, the electronic price label comprises antitheft properties.

In one embodiment of the invention, the position localization can be performed by means of a separate system from the electronic price label system, and when the location of the price label is clear the system can, with the base station of the electronic price label system, send information, such as e.g. price information or commands, to the electronic price label, said base station operating in the area in question. Locating the position of an electronic price label can be performed by means of an identifier in the electronic price label. The system to be used in position localization can be based on a different technology than the communication of the electronic price label system between base stations and electronic price labels. In one embodiment of the invention, the system to be used in locating the position of an electronic price label can be an Indoor Positioning System, RFID, Bluetooth and/or WiFi. The RFID system in the embodiments described above can therefore, in one embodiment of the invention, be replaced with some other Indoor Positioning System and/or with a position localization arrangement based on Bluetooth technology or WiFi.

The electronic price label comprises an identifier that is used in locating the position of the electronic price label. If the positioning system is an Indoor Positioning System, electronic price labels may comprise an identifier of the Indoor Positioning System. If the positioning system is an RFID-system, electronic price labels may comprise an RFID-identifier. If the positioning system is a Bluetooth system, electronic price labels may comprise a Bluetooth module. If the positioning system is a WiFi system, electronic price labels may comprise a WiFi module.

The antennas of the system locating the position of price labels and of the electronic radio-frequency price label system can be antennas that are separate from each other or can be shared antennas. If the antennas are separate, they can be arranged apart from each other e.g. in the bodies or enclosures. If the antennas are separate, they can also be arranged apart from each other but inside the same body as each other, e.g. inside the body structure and/or envelope structure of a base station of the electronic price label system.

It is obvious to the person skilled in the art that the different embodiments of the invention are not limited solely to the examples described above, and that they may therefore be varied within the scope of the claims presented below. The characteristic features possibly presented in the description in conjunction with other characteristic features can also, if necessary, be used separately to each other.

## Claims

1. Method for transferring data to an electronic price label with a price label system that comprises base stations of the electronic price label system, and which electronic price label (103) comprises a display (102) and communication means,
**characterized in that** in the method:
a query is sent to a certain electronic price label with means for locating the position of electronic price labels and/or of products for determining the location of the electronic price label, wherein the means for locating the position of electronic price labels and/or of products is a separate system from the electronic price label system,
a response is received from the electronic price label with the means for locating the position of electronic price labels and/or of products and the location of the electronic price label is determined on the basis of the response, and
a request and/or command is sent with the base station of the electronic price label system operating in the range of the determined location to the electronic price label,
wherein the means locating the position of electronic price labels and/or of products is an Indoor Positioning System, an RFID system, Bluetooth system and/or WiFi system and the electronic price labels comprise an identifier or module of the Indoor Positioning System, a Bluetooth module, a WiFi module and/or an RFID identifier.

2. Method according to claim 1, **characterized in that** the location of an electronic price label is determined only in a situation in which the last location of the electronic price label is not known and/or the electronic price label does not respond to the base station operating within range of its previous location to a command and/or to a request sent by the base station.

3. Method according to claim 1 or 2, **characterized in that** the electronic price label system is a bidirectional radio-frequency electronic price label system, in which a request and/or command is sent to an electronic price label from the base station of the electronic price label system and the electronic price labels respond to the base station by reflecting back the transmission of the base station.

4. Method according to any whatsoever of the preceding claims, **characterized in that** the means locating the position of electronic price labels and/or of products is an RFID transmitter and the electronic price labels comprise an RFID identifier.

5. Method according to any whatsoever of the preceding claims, **characterized in that** the location of an electronic price label (103) is recorded in the system.

6. Method according to any whatsoever of the preceding claims, **characterized in that** the electronic price label system forms a list of base stations within the operating range of which a certain price label can be found, in which list the base stations are arranged on the basis of the probability of finding a certain electronic price label within the operating range of each base station.

7. Method according to claim 6, **characterized in that** the sequence of the base station list is determined at least partly on the basis of the position of an electronic price label determined with the means for locating the position of electronic price labels.

8. Method according to claim 6 or 7, **characterized in that**, in sending a command and/or order to an electronic price label, the base station that is first in sequence in the base station list of a certain price label is used.

9. System, **characterized in that** it comprises an electronic price label system comprising at least one base station (104) and electronic price labels (103), which comprise a display (102) and communication means, the system further comprising means for locating the position of electronic price labels and/or of products, wherein the means for locating the position of electronic price labels and/or of products is a separate system from the electronic price label system,
wherein the system is adapted to send a query to a certain electronic price label with the means for locating the position of electronic price labels and/or of products, for determining the location of the electronic price label,
to receive a response from the electronic price label with the means for locating the position of electronic price labels and/or of products and to determine the location of the electronic price label on the basis of the response, and
to send a request and/or command with the base station of the electronic price label system operating in the range of the determined location to the electronic price label,
wherein the means locating the position of electronic price labels and/or of products is an Indoor Positioning System, an RFID system, Bluetooth system and/or WiFi system and the electronic price labels comprise an identifier of the Indoor Positioning System, a Bluetooth module, a WiFi module and/or an RFID identifier.

10. System according to claim 9, **characterized in that** the system is adapted to determine the location of an electronic price label only in a situation in which the last location of the electronic price label is not known and/or the electronic price label does not respond to the base station operating within range of its previous location to a command and/or to a request sent by the base station.

11. System according to claim 9 or 10, **characterized in that** the electronic price label system is a bidirectional radio-frequency electronic price label system, which is adapted to send a request and/or command to an electronic price label from a base station of the electronic price label system, and the electronic price labels are adapted to respond to the base station by reflecting back the transmission of the base station.

12. System according to any whatsoever of the preceding claims 9 - 11, **characterized in that** the means locating the position of electronic price labels and/or of products is an RFID transmitter and the electronic price labels comprise an RFID identifier.

13. System according to claim 12, **characterized in that** an electronic price label further comprises at least one communication module, and an RFID antenna connected to the communication module, which antenna comprises two parts, of which:
- the first antenna part (404, 504) is arranged on the circuit board (402, 502) of an electronic price label, and
- the second antenna part (406, 407, 506, 507), which is connected to the first antenna part, is arranged in connection with the envelope part (514) of an electronic price label, separate from the circuit board (402, 502).

14. System according to claim 13, **characterized in that** the second antenna part (406, 407, 506, 507) of an electronic price label is fitted inside and/or onto an inside surface of the envelope part (514) of an electronic price label and/or at least partly inside the structure of the envelope part (514).

15. System according to claim 13 or 14, **characterized in that** the second antenna part of an electronic price label is integrated directly into the injection molding of the envelope part (514), painted onto the inner surface of the envelope part (514) and/or is connected mechanically to the envelope part (514).

16. System according to any whatsoever of the preceding claims 13 - 15, **characterized in that** the second antenna part of an electronic price label comprises two dipole branches (406, 407, 506, 507).

17. System according to any whatsoever of the preceding claims 13 - 16, **characterized in that** the first antenna part (404, 504) of an electronic price label is arranged on a flexible or hard circuit board (402, 502).

18. System according to any whatsoever of the preceding claims 13 - 17, **characterized in that** the first antenna part (404, 504) of an electronic price label is arranged on both sides of the circuit board (402, 502).

19. System according to any whatsoever of the preceding claims 13 - 18, **characterized in that** the first antenna part (404, 504) of an electronic price label is arranged to function as a fitting part and/or a radiator part of the RFID antenna.

20. System according to any whatsoever of the preceding claims 13 - 19, **characterized in that** an electronic price label (400, 500) further comprises second communication means.

21. System according to claim 20, **characterized in that** the second communication means of an electronic price label are communication means that are adapted to communicate, by means of a near field, e.g. by means of NFC.

22. System according to claim 20 or 21, **characterized in that** the second communication means of an electronic price label are communication means that are adapted to communicate by means of a far field, e.g. by means of a radio-frequency electronic price label system.

23. System according to any whatsoever of the preceding claims 9 - 22, **characterized in that** the system is adapted to record the location of an electronic price label (103) in the system.

24. System according to any whatsoever of the preceding claims 9 - 23, **characterized in that** the electronic price label system is adapted to form a list of base stations within the operating range of which a certain price label can be found, in which list the base stations are arranged on the basis of the probability of finding a certain electronic price label within the operating range of each base station.

25. System according to claim 24, **characterized in that** the system is adapted to determine the sequence of the base station list at least partly on the basis of the position of an electronic price label determined with the means for locating the position of electronic price labels.

26. System according to claim 24 or 25, **characterized in that** the system is adapted to use, in sending a command and/or order to an electronic price label, a base station that is first in sequence in the base station list of a certain price label.

27. Price label system according to any whatsoever of the preceding claims 9 - 26, **characterized in that** the system is adapted to issue an alarm signal.

28. Price label system according to any whatsoever of the preceding claims 9 - 27, **characterized in that** the electronic price label system further comprises RFID readers and/or security gates, and an alarm signal is based on a response of the RFID readers and/or security gates when an electronic price label is taken into the reading range of an RFID reader and/or though a security gate.

## Patentansprüche

1. Verfahren zum Übertragen von Daten auf ein elektronisches Preisschild mit einem Preisschildsystem, das Basisstationen des elektronischen Preisschildsystems umfasst, und wobei das elektronische Preisschild (103) eine Anzeige (102) und Kommunikationsmittel umfasst,
**dadurch gekennzeichnet, dass** in dem Verfahren:
eine Abfrage an ein bestimmtes elektronisches Preisschild mit Mitteln zum Lokalisieren der Position von elektronischen Preisschildern und/oder von Produkten gesendet wird, um die Position des elektronischen Preisschildes zu bestimmen, wobei das Mittel zum Lokalisieren der Position von elektronischen Preisschildern und/oder von Produkten ein von dem elektronischen Preisschildsystem getrenntes System ist,
von dem elektronischen Preisschild mit den Mitteln zum Lokalisieren der Position von elektronischen Preisschildern und/oder von Produkten eine Antwort empfangen wird und die Position des elektronischen Preisschildes basierend auf der Antwort bestimmt wird, und
eine Anfrage und/oder ein Befehl mit der Basisstation des elektronischen Preisschildsystems, das im Bereich des bestimmten Standorts arbeitet, an das elektronische Preisschild gesendet wird,
wobei das Mittel zum Lokalisieren der Position der elektronischen Preisschilder und/oder der Produkte ein Innenraumpositionierungssystem, ein RFID-System, ein Bluetooth-System und/oder ein WiFi-System ist und die elektronischen Preisschilder eine Kennung oder ein Modul des Innenraumpositionierungssystems, ein Bluetooth-Modul, ein WiFi-Modul und/oder eine RFID-Kennung umfassen.

2. Verfahren nach Anspruch 1, **dadurch gekennzeichnet, dass** der Standort eines elektronischen Preisschildes nur in einer Situation bestimmt wird, in der der letzte Standort des elektronischen Preisschildes nicht bekannt ist und/oder das elektronische Preisschild auf einen Befehl und/oder eine Anfrage, die von der Basisstation gesendet wurde, nicht auf die Basisstation antwortet, die im Bereich seines vorherigen Standorts arbeitet.

3. Verfahren nach Anspruch 1 oder 2, **dadurch gekennzeichnet, dass** das elektronische Preisschildsystem ein bidirektionales hochfrequentes elektronisches Preisschildsystem ist, bei dem von der Basisstation des elektronischen Preisschildsystems eine Anfrage und/oder ein Befehl an ein elektronisches Preisschild gesendet wird und die elektronischen Preisschilder auf die Basisstation antworten, indem sie die Übertragung der Basisstation zurückwerfen.

4. Verfahren nach einem der vorstehenden Ansprüche, **dadurch gekennzeichnet, dass** das Mittel zum Lokalisieren der Position von elektronischen Preisschildern und/oder von Produkten ein RFID-Sender ist und die elektronischen Preisschilder einen RFID-Identifikator umfassen.

5. Verfahren nach einem der vorstehenden Ansprüche, **dadurch gekennzeichnet, dass** der Standort eines elektronischen Preisschildes (103) im System erfasst wird.

6. Verfahren nach einem der vorstehenden Ansprüche, **dadurch gekennzeichnet, dass** das elektronische Preisschildsystem eine Liste von Basisstationen bildet, in deren Betriebsbereich ein bestimmtes Preisschild gefunden werden kann, wobei die Basisstationen basierend auf der Wahrscheinlichkeit, ein bestimmtes elektronisches Preisschild im Betriebsbereich jeder Basisstation zu finden, in dieser Liste angeordnet sind.

7. Verfahren nach Anspruch 6, **dadurch gekennzeichnet, dass** die Sequenz der Basisstationsliste mindestens teilweise basierend auf der Position eines elektronischen Preisschildes bestimmt wird, die mit den Mitteln zum Lokalisieren der Position von elektronischen Preisschildern ermittelt wird.

8. Verfahren nach Anspruch 6 oder 7, **dadurch gekennzeichnet, dass** beim Senden eines Befehls und/oder Auftrags an ein elektronisches Preisschild die Basisstation verwendet wird, die in der Sequenz als erste in der Basisstationsliste eines bestimmten Preisschildes steht.

9. System, **dadurch gekennzeichnet, dass** es ein elektronisches Preisschildsystem umfasst, das mindestens eine Basisstation (104) und elektronische Preisschilder (103) umfasst, die eine Anzeige (102) und Kommunikationsmittel umfassen, wobei das System ferner Mittel zum Lokalisieren der Position von elektronischen Preisschildern und/oder von Produkten umfasst, wobei die Mittel zum Lokalisieren der Position von elektronischen Preisschildern und/oder von Produkten ein von dem elektronischen Preisschildsystem getrenntes System sind, wobei das System in der Lage ist, eine Abfrage an ein bestimmtes elektronisches Preisschild mit den Mitteln zum Lokalisieren der Position von elektronischen Preisschildern und/oder von Produkten zu senden, um die Position des elektronischen Preisschildes zu bestimmen, eine Antwort von dem elektronischen Preisschild mit den Mitteln zum Lokalisieren der Position von elektronischen Preisschildern und/oder von Produkten zu empfangen und die Position des elektronischen Preisschildes basierend auf der Antwort zu bestimmen, und
eine Anfrage und/oder einen Befehl mit der Basisstation des elektronischen Preisschildsystems, das im Bereich des bestimmten Standorts arbeitet, an das elektronische Preisschild zu senden,
wobei das Mittel zum Lokalisieren der Position der elektronischen Preisschilder und/oder der Produkte ein Innenraumpositionierungssystem, ein RFID-System, ein Bluetooth-System und/oder ein WiFi-System ist und die elektronischen Preisschilder eine Kennung des Innenraumpositionierungssystems, ein Bluetooth-Modul, ein WiFi-Modul und/oder eine RFID-Kennung umfassen.

10. System nach Anspruch 9, **dadurch gekennzeichnet, dass** das System geeignet ist, den Standort eines elektronischen Preisschildes nur in einer Situation zu bestimmen, in der der letzte Standort des elektronischen Preisschildes nicht bekannt ist und/oder das elektronische Preisschild auf einen Befehl und/oder eine Anfrage, die von der Basisstation gesendet wird, nicht auf die Basisstation antwortet, die im Betriebsbereich seines vorherigen Standorts arbeitet.

11. System nach Anspruch 9 oder 10, **dadurch gekennzeichnet, dass** das elektronische Preisschildsystem ein bidirektionales elektronisches Funkfrequenz-Preisschildsystem ist, das dazu geeignet ist, eine Anfrage und/oder einen Befehl an ein elektronisches Preisschild von einer Basisstation des elektronischen Preisschildsystems zu senden, und die elektronischen Preisschilder dazu geeignet sind, auf die Basisstation zu antworten, indem sie die Übertragung der Basisstation zurückwerfen.

12. System nach einem der vorstehenden Ansprüche 9 bis 11, **dadurch gekennzeichnet, dass** das Mittel zum Lokalisieren der Position von elektronischen Preisschildern und/oder von Produkten ein RFID-Sender ist und die elektronischen Preisschilder einen RFID-Identifikator umfassen.

13. System nach Anspruch 12, **dadurch gekennzeichnet, dass** ein elektronisches Preisschild ferner mindestens ein Kommunikationsmodul und eine mit dem Kommunikationsmodul verbundene RFID-Antenne umfasst, wobei die Antenne zwei Teile umfasst, von denen:
- der erste Antennenteil (404, 504) auf der Schaltungsplatte (402, 502) eines elektronischen Preisschildes angeordnet ist, und
- der zweite Antennenteil (406, 407, 506, 507), der mit dem ersten Antennenteil verbunden ist, in Verbindung mit dem Umschlagteil (514) eines elektronischen Preisschildes angeordnet ist, getrennt von der Schaltungsplatte (402, 502).

14. System nach Anspruch 13, **dadurch gekennzeichnet, dass** der zweite Antennenteil (406, 407, 506, 507) eines elektronischen Preisschildes innerhalb und/oder auf einer inneren Oberfläche des Umschlagteils (514) eines elektronischen Preisschildes und/oder mindestens teilweise innerhalb der Struktur des Umschlagteils (514) angebracht ist.

15. System nach Anspruch 13 oder 14, **dadurch gekennzeichnet, dass** der zweite Antennenteil eines elektronischen Preisschildes direkt in das Spritzgussteil des Umschlagteils (514) integriert, auf die innere Oberfläche des Umschlagteils (514) lackiert und/oder mechanisch mit dem Umschlagteil (514) verbunden ist.

16. System nach einem der vorstehenden Ansprüche 13 bis 15, **dadurch gekennzeichnet, dass** der zweite Antennenteil eines elektronischen Preisschildes zwei Dipolzweige (406, 407, 506, 507) umfasst.

17. System nach einem der vorstehenden Ansprüche 13 bis 16, **dadurch gekennzeichnet, dass** der erste Antennenteil (404, 504) eines elektronischen Preisschildes auf einer flexiblen oder harten Schaltungsplatte (402, 502) angeordnet ist.

18. System nach einem der vorstehenden Ansprüche 13 bis 17, **dadurch gekennzeichnet, dass** der erste Antennenteil (404, 504) eines elektronischen Preisschildes auf beiden Seiten der Schaltungsplatte (402, 502) angeordnet ist.

19. System nach einem der vorstehenden Ansprüche 13 bis 18, **dadurch gekennzeichnet, dass** das erste Antennenteil (404, 504) eines elektronischen Preisschildes angeordnet ist, um als Anpassungsteil und/oder als Strahlerteil der RFID-Antenne zu fungieren.

20. System nach einem der vorstehenden Ansprüche 13 bis 19, **dadurch gekennzeichnet, dass** ein elektronisches Preisschild (400, 500) ferner ein zweites Kommunikationsmittel umfasst.

21. System nach Anspruch 20, **dadurch gekennzeichnet, dass** die zweiten Kommunikationsmittel eines elektronischen Preisschildes Kommunikationsmittel sind, die geeignet sind, mittels eines Nahfeldes zu kommunizieren, z. B. mittels NFC.

22. System nach Anspruch 20 oder 21, **dadurch gekennzeichnet, dass** die zweiten Kommunikationsmittel eines elektronischen Preisschildes Kommunikationsmittel sind, die geeignet sind, mittels eines Fernfeldes zu kommunizieren, z. B. mittels eines elektronischen Preisschildsystems mit Radiofrequenz.

23. System nach einem der vorstehenden Ansprüche 9 bis 22, **dadurch gekennzeichnet, dass** das System geeignet ist, den Standort eines elektronischen Preisschildes (103) im System zu erfassen.

24. System nach einem der vorstehenden Ansprüche 9 bis 23, **dadurch gekennzeichnet, dass** das System für elektronische Preisschilder geeignet ist, eine Liste von Basisstationen zu bilden, in deren Betriebsbereich ein bestimmtes Preisschild gefunden werden kann, wobei in dieser Liste die Basisstationen basierend auf der Wahrscheinlichkeit des Auffindens eines bestimmten elektronischen Preisschildes im Betriebsbereich jeder Basisstation angeordnet sind.

25. System nach Anspruch 24, **dadurch gekennzeichnet, dass** das System geeignet ist, die Sequenz der Basisstationsliste mindestens teilweise basierend auf der Position eines elektronischen Preisschildes zu bestimmen, die mit den Mitteln zur Lokalisierung der Position von elektronischen Preisschildern ermittelt wurde.

26. System nach Anspruch 24 oder 25, **dadurch gekennzeichnet, dass** das System geeignet ist, beim Senden eines Befehls und/oder einer Anweisung an ein elektronisches Preisschild eine Basisstation zu verwenden, die in der Sequenz in der Basisstationsliste eines bestimmten Preisschildes an erster Stelle steht.

27. Preisschildsystem nach einem der vorstehenden Ansprüche 9 bis 26, **dadurch gekennzeichnet, dass** das System zur Ausgabe eines Alarmsignals eingerichtet ist.

28. Preisschildsystem nach einem der vorstehenden Ansprüche 9 bis 27, **dadurch gekennzeichnet, dass** das elektronische Preisschildsystem ferner RFID-Leser und/oder Sicherheitsschleusen umfasst und ein Alarmsignal auf einer Reaktion der RFID-Leser und/oder Sicherheitsschleusen basiert, wenn ein elektronisches Preisschild in den Lesebereich eines RFID-Lesers und/oder durch eine Sicherheitsschleuse gebracht wird.

## Revendications

1. Procédé de transfert de données vers une étiquette de prix électronique avec un système d'étiquettes de prix qui comprend des stations de base du système d'étiquettes de prix électroniques, et laquelle étiquette de prix électronique (103) comprend un affichage (102) et des moyens de communication,
**caractérisé en ce que** dans le procédé :
une demande est envoyée à une certaine étiquette de prix électronique avec un moyen de localisation de la position des étiquettes de prix électroniques et/ou des produits pour déterminer l'emplacement de l'étiquette de prix électronique, dans lequel le moyen de localisation de la position des étiquettes de prix électroniques et/ou des produits est un système distinct du système d'étiquettes de prix électroniques,
une réponse est reçue de l'étiquette de prix électronique avec le moyen de localisation de la position des étiquettes de prix électroniques et/ou des produits et l'emplacement de l'étiquette de prix électronique est déterminé sur la base de la réponse, et
une demande et/ou une commande est envoyée avec la station de base du système d'étiquettes de prix électroniques fonctionnant à portée de l'emplacement déterminé à l'étiquette de prix électronique,
dans lequel le moyen de localisation de la position des étiquettes de prix électroniques et/ou des produits sont un système de positionnement intérieur, un système RFID, un système Bluetooth et/ou un système WiFi et les étiquettes de prix électroniques comprennent un identifiant ou un module du système de positionnement intérieur, un module Bluetooth, un module WiFi et/ou un identifiant RFID.

2. Procédé selon la revendication 1, **caractérisé en ce que** l'emplacement d'une étiquette de prix électronique est déterminé uniquement dans une situation dans laquelle le dernier emplacement de l'étiquette de prix électronique n'est pas connu et/ou l'étiquette de prix électronique ne répond pas à la station de base fonctionnant à portée de son emplacement précédent à une commande et/ou à une demande envoyée par la station de base.

3. Procédé selon la revendication 1 ou 2, **caractérisé en ce que** le système d'étiquettes de prix électroniques est un système d'étiquettes de prix électroniques à radiofréquence bidirectionnelle, dans lequel une demande et/ou une commande est envoyée à une étiquette de prix électronique depuis la station de base du système d'étiquettes de prix électroniques et les étiquettes de prix électroniques répondent à la station de base en réfléchissant la transmission de la station de base.

4. Procédé selon l'une quelconque des revendications précédentes, **caractérisé en ce que** le moyen de localisation de la position d'étiquettes de prix électroniques et/ou de produits est un émetteur RFID et les étiquettes de prix électroniques comprennent un identifiant RFID.

5. Procédé selon l'une quelconque des revendications précédentes, **caractérisé en ce que** l'emplacement d'une étiquette de prix électronique (103) est enregistré dans le système.

6. Procédé selon l'une quelconque des revendications précédentes, **caractérisé en ce que** le système d'étiquettes de prix électroniques forme une liste de stations de base dans la portée de fonctionnement de laquelle une certaine étiquette de prix peut être trouvée, liste dans laquelle les stations de base sont agencées sur la base de la probabilité de trouver une certaine étiquette de prix électronique dans la portée de fonctionnement de chaque station de base.

7. Procédé selon la revendication 6, **caractérisé en ce que** la séquence de la liste de stations de base est déterminée au moins en partie sur la base de la position d'une étiquette de prix électronique déterminée avec le moyen de localisation de la position d'étiquettes de prix électroniques.

8. Procédé selon la revendication 6 ou 7, **caractérisé en ce que**, lors de l'envoi d'une commande et/ou d'un ordre à une étiquette de prix électronique, la station de base qui est la première dans la séquence dans la liste de stations de base d'une certaine étiquette de prix est utilisée.

9. Système **caractérisé en ce qu'**il comprend un système d'étiquettes de prix électroniques comprenant au moins une station de base (104) et des étiquettes de prix électroniques (103), lesquelles comprennent un affichage (102) et un moyen de communication, le système comprenant également un moyen de localisation de la position des étiquettes de prix électroniques et/ou des produits, dans lequel le moyen de localisation de la position des étiquettes de prix électroniques et/ou des produits est un système distinct du système d'étiquettes de prix électroniques,
dans lequel le système est conçu pour envoyer une demande à une certaine étiquette de prix électronique avec le moyen de localisation de la position des étiquettes de prix électroniques et/ou des produits, pour déterminer l'emplacement de l'étiquette de prix électronique,
pour recevoir une réponse de l'étiquette de prix électronique avec le moyen de localisation de la position des étiquettes de prix électroniques et/ou des produits et pour déterminer l'emplacement de l'étiquette de prix électronique sur la base de la réponse, et
pour envoyer une demande et/ou une commande avec la station de base du système d'étiquettes de prix électroniques fonctionnant à portée de l'emplacement déterminé à l'étiquette de prix électronique,
dans lequel le moyen de localisation de la position des étiquettes de prix électroniques et/ou des produits est un système de positionnement intérieur, un système RFID, un système Bluetooth et/ou un système WiFi et les étiquettes de prix électroniques comprennent un identifiant du système de positionnement intérieur, un module Bluetooth, un module WiFi et/ou un identifiant RFID.

10. Système selon la revendication 9, **caractérisé en ce que** le système est conçu pour déterminer l'emplacement d'une étiquette de prix électronique uniquement dans une situation dans laquelle le dernier emplacement de l'étiquette de prix électronique n'est pas connu et/ou l'étiquette de prix électronique ne répond pas à la station de base fonctionnant à portée de son emplacement précédent à une commande et/ou à une demande envoyée par la station de base.

11. Système selon la revendication 9 ou 10, **caractérisé en ce que** le système d'étiquettes de prix électroniques est un système d'étiquettes de prix électroniques à radiofréquence bidirectionnelle, qui est conçu pour envoyer une demande et/ou une commande à une étiquette de prix électronique à partir d'une station de base du système d'étiquettes de prix électroniques, et les étiquettes de prix électroniques sont conçues pour répondre à la station de base en réfléchissant la transmission de la station de base.

12. Système selon l'une quelconque des revendications précédentes 9 à 11, **caractérisé en ce que** le moyen de localisation de la position des étiquettes de prix électroniques et/ou des produits est un émetteur RFID et les étiquettes de prix électroniques comprennent un identifiant RFID.

13. Système selon la revendication 12, **caractérisé en ce qu'**une étiquette de prix électronique comprend également au moins un module de communication, et une antenne RFID connectée au module de communication, laquelle antenne comprend deux parties, dont :
- la première partie d'antenne (404, 504) est agencée sur la carte de circuit imprimé (402, 502) d'une étiquette de prix électronique, et
- la seconde partie d'antenne (406, 407, 506, 507), qui est connectée à la première partie d'antenne, est agencée en liaison avec la partie enveloppe (514) d'une étiquette de prix électronique, distincte de la carte de circuit imprimé (402, 502).

14. Système selon la revendication 13, **caractérisé en ce que** la seconde partie d'antenne (406, 407, 506, 507) d'une étiquette de prix électronique est montée à l'intérieur et/ou sur une surface intérieure de la partie enveloppe (514) d'une étiquette de prix électronique et/ou au moins en partie à l'intérieur de la structure de la partie enveloppe (514).

15. Système selon la revendication 13 ou 14, **caractérisé en ce que** la seconde partie d'antenne d'une étiquette de prix électronique est intégrée directement dans le moulage par injection de la partie enveloppe (514), peinte sur la surface intérieure de la partie enveloppe (514) et/ou est reliée mécaniquement à la partie enveloppe (514).

16. Système selon l'une quelconque des revendications précédentes 13 à 15, **caractérisé en ce que** la seconde partie d'antenne d'une étiquette de prix électronique comprend deux branches dipôles (406, 407, 506, 507).

17. Système selon l'une quelconque des revendications précédentes 13 à 16, **caractérisé en ce que** la première partie d'antenne (404, 504) d'une étiquette de prix électronique est agencée sur une carte de circuit imprimé flexible ou rigide (402, 502).

18. Système selon l'une quelconque des revendications précédentes 13 à 17, **caractérisé en ce que** la première partie d'antenne (404, 504) d'une étiquette de prix électronique est agencée des deux côtés de la carte de circuit imprimé (402, 502).

19. Système selon l'une quelconque des revendications précédentes 13 à 18, **caractérisé en ce que** la première partie d'antenne (404, 504) d'une étiquette de prix électronique est agencée pour fonctionner comme une partie de montage et/ou une partie de radiateur de l'antenne RFID.

20. Système selon l'une quelconque des revendications précédentes 13 à 19, **caractérisé en ce qu'**une étiquette de prix électronique (400, 500) comprend également des seconds moyens de communication.

21. Système selon la revendication 20, **caractérisé en ce que** les seconds moyens de communication d'une étiquette de prix électronique sont des moyens de communication conçus pour communiquer, au moyen d'un champ proche, par exemple au moyen de NFC.

22. Système selon la revendication 20 ou 21, **caractérisé en ce que** les seconds moyens de communication d'une étiquette de prix électronique sont des moyens de communication conçus pour communiquer au moyen d'un champ lointain, par exemple au moyen d'un système d'étiquettes de prix électroniques à radiofréquence.

23. Système selon l'une quelconque des revendications précédentes 9 à 22, **caractérisé en ce que** le système est conçu pour enregistrer l'emplacement d'une étiquette de prix électronique (103) dans le système.

24. Système selon l'une quelconque des revendications précédentes 9 à 23, **caractérisé en ce que** le système d'étiquettes de prix électroniques est conçu pour former une liste de stations de base dans la portée de fonctionnement desquelles une certaine étiquette de prix peut être trouvée, dans laquelle liste les stations de base sont agencées sur la base de la probabilité de trouver une certaine étiquette de prix électronique dans la portée de fonctionnement de chaque station de base.

25. Système selon la revendication 24, **caractérisé en ce que** le système est conçu pour déterminer la séquence de la liste de stations de base au moins en partie sur la base de la position d'une étiquette de prix électronique déterminée avec le moyen de localisation de la position d'étiquettes de prix électroniques.

26. Système selon la revendication 24 ou 25, **caractérisé en ce que** le système est conçu pour utiliser, lors de l'envoi d'une commande et/ou d'un ordre à une étiquette de prix électronique, une station de base qui est la première dans la séquence dans la liste de stations de base d'une certaine étiquette de prix.

27. Système d'étiquettes de prix selon l'une quelconque des revendications précédentes 9 à 26, **caractérisé en ce que** le système est conçu pour émettre un signal d'alarme.

28. Système d'étiquettes de prix selon l'une quelconque des revendications précédentes 9 à 27, **caractérisé en ce que** le système d'étiquettes de prix électroniques comprend également des lecteurs RFID et/ou des portes de sécurité, et un signal d'alarme est basé sur une réponse des lecteurs RFID et/ou des portes de sécurité lorsqu'une étiquette de prix électronique est introduite dans la portée de lecture d'un lecteur RFID et/ou à travers une porte de sécurité.
